**Europäisches Patentamt**

**European Patent Office**

**Office européen des brevets**

(19)

(11) Numéro de publication: **0 062 944**

**B1**

(12) **FASCICULE DE BREVET EUROPEEN**

(45) Date de publication du fascicule du brevet: **19.06.85**

(21) Numéro de dépôt: **82200376.0**

(22) Date de dépôt: **26.03.82**

(51) Int. Cl.⁴: **B 01 D 13/00, C 02 F 1/18**

(54) **Dispositif de production d'eau douce à partir d'eau de mer par osmose inverse.**

(30) Priorité: **06.04.81 FR 8107185**

(43) Date de publication de la demande:
**20.10.82 Bulletin 82/42**

(45) Mention de la délivrance du brevet:
**19.06.85 Bulletin 85/25**

(84) Etats contractants désignés:
**AT BE CH DE GB IT LI LU NL SE**

(56) Documents cités:
**FR-A-1 474 929**
**GB-A-1 141 138**
**GB-A-1 436 111**

(73) Titulaire: **Lopez, Fernand**
**27, Rue Emile Barrière**
**F-31200 Toulouse (FR)**

(72) Inventeur: **Lopez, Fernand**
**27, Rue Emile Barrière**
**F-31200 Toulouse (FR)**

(74) Mandataire: **Barre, Philippe et al**
**Cabinet Barre-Gatti-Laforgue 95 rue des**
**Amidonniers**
**F-31069 Toulouse Cédex (FR)**

Courier Press, Leamington Spa, England.

## Description

L'invention concerne un dispositif de production d'eau douce à partir d'eau de mer, par filtration à travers une ou des membranes semi-perméables sélectives d'osmose inverse. Elle s'étend aux diverses applications du dispositif, en particulier pour réaliser un appareil de survie apte à délivrer de l'eau douce à des naufragés, ou pour permettre d'approvisionner un bateau en eau douce, ou encore pour produire industriellement de l'eau douce à partir d'une plateforme côtière.

Le phénomène d'osmose inverse est maintenant bien connu et plusieurs procédés utilisant ce phénomène ont été proposés pour réaliser un dessalement d'eau de mer. Un type de procédés consiste à envoyer le flux d'eau salée à pression élevée, supérieure à la pression osmotique, dans une enveloppe équipée d'une membrane semi-perméable sélective d'osmose inverse; les conditions essentielles de mise en oeuvre de ces procédés résident, d'une part, dans la valeur élevée de la pression du flux (la pression osmotique proportionnelle à la salinité étant très élevée pour des eaux de mer, de l'ordre de 25 bars par exemple pour une eau de salinité égale à 35 g/l), d'autre part, dans l'obligation de créer un courant d'eau continu en surface de la membrane pour éviter un accroissement de la salinité de l'eau au voisinage de celle-ci; ces conditions imposent la présence de groupes de pompage puissants qui conduisent à des installations coûteuses et consommatrices d'énergie. En particulier, il est tout à fait inconcevable de mettre en oeuvre ce type de procédé sur de petits bâteaux qui ne disposeraient pas de la puissance nécessaire et, à plus fortes raisons, sur des embarcations de secours dépourvues de toute source énergétique.

Un autre type de procédés consiste à plonger un appareil d'osmose inverse comprenant une membrane semiperméable et un réservoir de recueil d'eau douce, à une profondeur suffisante pour que la pression ambiante soit nettement supérieure à la pression osmotique. Par exemple, pour une eau de salinité de l'ordre de 35 g/l, cette profondeur doit être supérieure à 300 mètres et si possible de l'ordre de 450 à 500 mètres en vue d'autoriser des vitesses de filtration satisfaisantes. Cette sujétion limite considérablement l'intérêt pratique de ces dispositifs à immersion, qui ne paraissent pas avoir été appliqués jusqu'à ce jour.

La présente invention se propose de fournir un nouveau dispositif, qui utilise le phénomène d'osmose inverse pour le dessalement de l'eau de mer, mais ne soit pas soumis aux inconvénients ou limitations des procédés connus.

Un objectif de l'invention est en particulier de fournir un dispositif du type à immersion, exigeant des profondeurs d'immersion beaucoup plus faibles que celles demandées par les dispositifs connus de ce genre.

Un autre objectif est de limiter les phénomènes de concentration saline au voisinage de la ou des membranes du dispositif afin d'éviter une réduction de l'efficacité de celles-ci au terme d'un certain temps de fonctionnement.

L'invention vise en outre à décrire des applications particulières dudit dispositif, d'une part, dans le domaine de la survie en cas de naufrage, d'autre part, dans celui de l'approvisionnement des bateaux en eau douce, enfin dans le domaine de la production industrielle d'eau douce aux abords des côtes.

A cet effet, le dispositif conforme à l'invention qui est du type comportant au moins une membrane semiperméable sélective adaptée pour réaliser une filtration par osmose inverse de l'eau de mer, comprend:

· des moyens de recueil de l'eau douce produite,
· une chambre dite chambre haute pression, munie de la ou des membranes semi-perméables, chaque membrane étant interposée entre ladite chambre haute pression et les moyens de recueil de l'eau douce de sorte qu'une des faces actives de la membrane communique avec lesdits moyens de recueil et que l'autre face active communique avec ladite chambre haute pression,
· un piston mobile dans une chambre sous atmosphère gazeuse, l'ensemble chambre-piston étant adapté pour autoriser le déplacement dudit piston en assurant l'étanchéité avec le milieu extérieur à la chambre et le piston étant agencé de telle façon qu'une face de ce piston de surface utile s puisse pénétrer de façon étanche et sur une profondeur variable dans la chambre haute pression, la face opposée du piston étant à la pression du milieu extérieur et ayant une surface utile S supérieure à la surface s.

Par "faces actives" de la ou des membranes, on entend les parties de celles-ci qui, dans le processus d'osmose inverse, forment d'une part, l'interface avec l'eau salée, d'autre part, l'interface avec l'eau pure. Pour une membrane plane formée par plusieurs couches de matériau sélectif semi-perméable, ces faces actives sont constituées par les deux faces opposées de la membrane. Pour une membrane enroulée sur elle-même en spirale, elles sont constituées, d'une part, par les deux parois externes en forme de spirale de la membrane et, d'autre part, par les deux parois internes de celle-ci. Pour une membrane semi-perméable constituée par une multitude de fibres creuses capillaires en forme de boucle, ces faces actives consistent, d'une part, dans les surfaces cylindriques externes des fibres, d'autre part, dans les surfaces cylindriques internes de leurs canaux capillaires; ce type de membrane sera en général préfére. Le matériau utilisé peut être de tout type approprié connu, notamment à base d'acétate de cellulose ou de polyamides aromatiques.

De préférence, le piston mobile qui pénètre dans la chambre haute pression, est réalisé de sorte que le rapport de surface S/s de ses faces soit approximativement compris entre 15 et 40.

Comme on le comprendra mieux plus loin, le dispositif conforme à l'invention est plongé dans l'eau de mer à une profondeur fonction du rapport S/s (de l'ordre de 15 à 35 mètres dans l'exemple précité); cette profondeur très inférieure à celle nécessaire dans les dispositifs à immersion connus (450 à 500 mètres) conditionne un travail de la ou des membranes semi-perméables sous une pression de l'ordré de 50 bars qui est optimale sur le plan de l'efficacité de la filtration osmotique: un tel dispositif est ainsi affranchi des inconvénients et limitations des dispositifs connus, tout en se trouvant dans les meilleures conditions de fonctionnement.

Selon les applications, les moyens de receuil de l'eau douce peuvent comprendre un réservoir doté de moyens d'extraction de l'eau receuillie, ou bien une chambre pourvue d'un conduit souple d'écoulement de l'eau. Dans le premier cas, l'eau douce est prélevée en remontant le réservoir en surface; dans le second, elle est évacuée par le conduit, lequel est agencé pour relier le dispositif à la surface; il est à noter que, compte-tenu de la pression élevée régnant dans la chambre haute pression (de l'ordre de 50 bars), l'eau douce peut être obtenue dans la chambre de recueil à une pression supérieure à celle qui correspond à la profondeur du dispositif (de l'ordre de 1,5 à 3,5 bars) de sorte que son écoulement en surface peut s'effectuer naturellement en l'absence de moyens de pompage.

Dans le cadre d'un premier type d'application, le dispositif conforme à l'invention peut être adapté pour jouer le rôle d'appareil de survie pour naufragés; il présente alors de préférence un volume approximativement compris entre 0,5 et 2 litres et comprend un moyen de fixation d'un câble en vue de son immersion manuelle, le cas échéant avec l'aide d'une courte canne munie d'un moulinet ou de tout organe analogue.

Dans cette application, le réservoir d'eau douce est de préférence réalisé en matière transparente et est fixé de façon amovible en bout de la· chambre haute pression, par exemple au moyen d'un système d'encliquetage rapide. Avant d'immerger le dispositif, le réservoir est enlevé et la chambre haute pression remplie d'eau de mer; le réservoir est ensuite remis en place et le dispositif immergé à la profondeur appropriée, en particulier entre 15 et 35 mètres. Cette faible profondeur rend cette opération d'exécution facile et possible dans pratiquement toute zone marine. A cette profondeur, le piston engendre une compression de l'eau contenue dans la chambre haute pression et porte celle-ci à une pression très supérieure à la pression osmotique. Le phénomène d'osmose inverse se déroule alors et un volume d'eau (égal au volume de pénétration du piston dans la chambre haute pression) est filtré à travers la membrane et receuilli dans le réservoir. Le dispositif peut alors être remonté.

Selon un mode de réalisation qui sera décrit en détail plus loin, le dispositif est équipé de moyens de rappel du piston permettant son retour vers la position initiale lors de la remontée et d'un système à clapet autorisant l'admission d'eau de mer dans la chambre haute pression au cours de ladite remontée. Le remplissage de la chambre haute pression s'effectue alors automatiquement à chaque remontée, l'utilisateur n'ayant plus qu'à exécuter le nombre de descentes et remontées, nécessaire pour remplir le réservoir d'eau douce.

Par ailleurs, dans le cadre d'un deuxième type d'application, le dispositif conforme à l'invention est adapté pour être traîné à l'arrière d'un bateau en vue d'approvisionner celui-ci en eau douce; il se présente alors sous la forme d'un corps ayant un profil hydro-dynamique et un volume compris entre quelques litres et quelques dizaines de litres. Ce corps est associé à un câble de traction fixé à l'avant de celui-ci et à un conduit souple d'écoulement de l'eau douce lié audit câble afin de courir le long de celui-ci jusqu'au bateau.

Selon un mode de réalisation qui sera décrit en détail plus loin, ce dispositif comprend d'une part un système à clapets engendrant pendant la remontée, un balayage de la chambre haute pression par l'eau de mer d'autre part, à l'extérieur du corps, au moins un volet orientable agencé pour engendrer la montée ou la descente du dispositif en fonction de la position dudit volet; un mécanisme de manoeuvre du ou desdits volets est en outre associé au piston du dispositif de façon à commander lesdits volets, soit vers la position de remontée lorsque le piston parvient en fin de course vers la chambre haute pression, soit vers la position de descente lorsque le piston parvient en fin de course opposée.

Ainsi, le dispositif ci-dessus décrit suit à l'arrière du bateau une trajectoire comprenant une succession de descentes et de remontées. Au cours de chaque remontée, la chambre haute pression est rincée et son eau entièrement renouvelée, ce qui évite que les sels se concentrent dans cette chambre au terme des divers cycles de montées et descentes.

Enfin, dans le cadre d'un troisième type d'application, le dispositif conforme à l'invention est adapté pour assurer une production industrielle d'eau douce à partir d'une plateforme côtière ou autre engin flottant analogue; il présente alors un volume approximativement compris entre quelques centaines de litres et quelques dizaines de m3 et est attaché à un câble de déplacement vertical à partir de la plateforme. Il peut être associé à une installation de montée et descente en continu, actionnant plusieurs dispositifs.

Comme dans le cas précédent, le dispositif visé dans cette application comprend avantageusement un système à clapets engendrant pendant la remontée un écoulement d'eau de mer à travers la chambre haute pression en vue d'assurer un balayage de celle-ci et un renouvellement de son eau.

D'autres caractéristiques, buts et avantages de l'invention se dégageront de la description qui suit en référence aux dessins annexés, lesquels presentent à titre d'exemples trois versions du dispositif correspondant aux trois applications ci-dessus évoquées; sur ces dessins qui font partie intégrante de la présente description:

— la figure 1 est une vue en coupe axiale, à peu près à échelle 1, d'un dispositif de survie conforme à l'invention,

— les figures 2a, 2b, 3a, 3b sont des vues schématiques illustrant l'utilisation dudit dispositif et son fonctionnement,

— la figure 4 est une vue en coupe axiale d'un dispositif conforme à l'invention pour l'approvisionnement en eau douce d'un bateau,

— la figure 5 en est une vue extérieure, en perspective schématique,

— les figures 6a, 6b, 7a, 7b sont des vues schématiques illustrant le fonctionnement dudit dispositif,

— la figure 8 est une vue en coupe axiale d'un dispositif industriel de production d'eau douce conforme à l'invention,

— la figure 9 est une vue schématique illustrant un exemple d'utilisation de ce dernier dispositif.

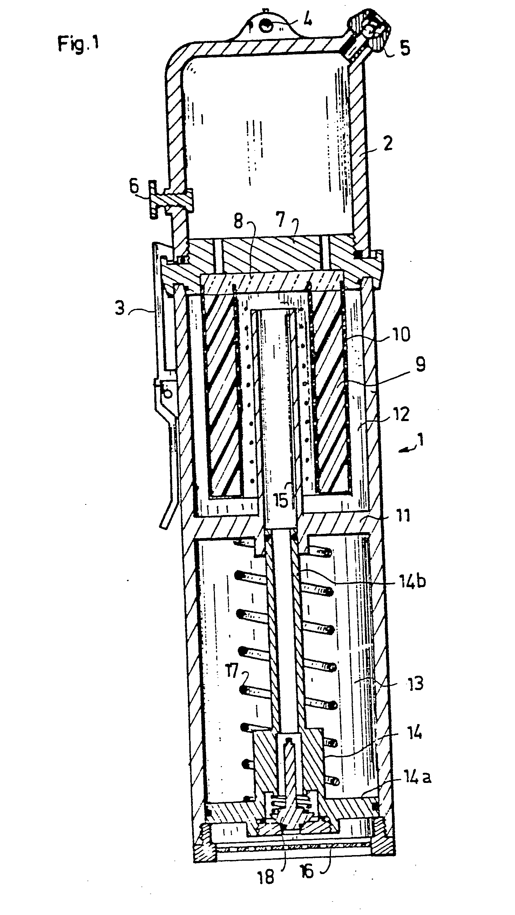

Le dispositif de survie représenté à titre d'exemple à la figure 1 est destiné à équiper des embarcations de secours pour permettre à un ou des naufragés de fabriquer de l'eau douce à partir d'eau de mer, même en eaux peu profondes, aux termes d'opérations faciles à exécuter.

En l'exemple, ce dispositif comprend un corps cylindrique 1 de forme allongée, en bout duquel est fixé un réservoir d'eau douce 2 par un système d'encliquetage rapide 3. Le volume total de l'ensemble peut être de l'ordre de 0,7 à 0,9 litre.

Le réservoir 2 est réalisé en matériau transparent et comporte un organe de fixation 4 auquel est lié un câble de 20 à 30 mètres de longueur. Ce réservoir est muni de moyens d'extraction de l'eau recueillie, en l'exemple un embout à clap et 5 et une prise d'air 6 destinée à être actionnée manuellement par l'utilisateur pour permettre la sortie de l'eau par l'embout 5. L'embout à clapet 5 jour également le rôle de soupape de sécurité.

Le réservoir 2 est fermé de façon étanche par un couvercle 7 vissé sur celui-ci; ce couvercle porte un support perméable de membrane 8 et est percé de lumières pour le passage de l'eau douce ayant traversé le support 8 après filtration à travers la membrane.

Au support 8 et du côté externe du réservoir 2, est assujettie une membrane semi-perméable sélective d'osmose inverse 9 qui en l'exemple présente la forme d'une couronne cylindrique et est protégée par une enveloppe ajourée 10.

Le corps cylindrique 1 est séparé par une cloison 11 en une chambre dite haute pression 12 et une chambre étanche 13 sous atmosphère gazeuse. Lorsque le réservoir 2 est encliqueté sur le corps 1, la membrane 9 vient s'insérer dans la chambre haute pression 12 comme le montre la figure 1, une de ses faces actives (interface avec l'eau de mer) étant plongée au coeur de l'eau contenue dans ladite chambre et l'autre face active (interface avec l'eau douce) communiquant avec le réservoir 2.

En outre, le corps 1 contient un piston 14 qui comprend un disque cylindrique 14a de surface utile $S_1$ de l'ordre d'une vingtaine de cm2 et une extension axiale 14b de surface utile $s_1$ de l'ordre de 0,8 cm2 (ces valeurs étant bien entendu fournies à titre purement indicatif).

L'extension axiale 14b du piston est logée à son extrémité dans un cyclindre 15 de section conjuguée que porte la cloison 11, qui s'étend entre la chambre haute pression 12 et la chambre sous atmosphère gazeuse 13; cette extension axiale 14b peut pénétrer sur une profondeur variable dans ledit cylindre 15 et son extrémité est dotée d'un joint périphérique d'étanchéité en appui dans ledit cylindre.

A l'autre extrémité, le disque 14a peut se déplacer dans la chambre 13 qui joue le rôle de cylindre de guidage de celui-ci; un joint périphérique assure l'étanchéité de sorte que ce disque sépare étanchément la chambre sous atmosphère gazeuse 13 du milieu extérieur. A l'extrémité du corps 1 peut être prévue une grille protectrice 16.

En outre, un ressort de rappel 17 est disposé dans la chambre 13 entre la cloison 11 et le disque 14a du piston en vue de solliciter ce dernier dans le sens de son écartement par rapport à la chambre haute pression 12.

Il est à noter que dans la chambre 13 règne une pression d'air qui est en particulier prévue égale à la pression atmosphérique lorsque le piston est écarté de la chambre haute pression 12 (pour des raisons de facilité de fabrication). Lorsque l'air est comprimé, il exerce une pression de rappel qui s'ajoute à celle du ressort 17; le cas échéant ce dernier pourrait être supprimé en prévoyant une pression d'air plus importante dans la chambre 13. Bien entendu la pression d'air dans la chambre 13 peut éventuellement être inférieure à celle ci-dessus évoquée; éventuellement, cette chambre peut-être sous vide ou sous vide partiel avec un ressort de puissance approprié.

Par ailleurs, le piston 14 est creusé d'un canal axial et d'un évidement dans lequel est logé un système de clapet 18. En l'exemple, ce système comprend un clapet à portée conique qui est agencé comme le montre la figure 1 pour autoriser l'admission d'eau vers la chambre haute pression 12 lorsque la pression de ladite chambre devient inférieure à la pression extérieure (à une constante de tarage près, fournie par un ressort de sollicitation du clapet vers la position de fermeture).

Lorsque le clapet 18 est fermé, le piston 14 est ainsi soumis sur sa surface utile $s_1$ à la pression régnant dans la chambre haute pression 12 et sur sa surface utile $S_1$ à la pression du milieu marin extérieur.

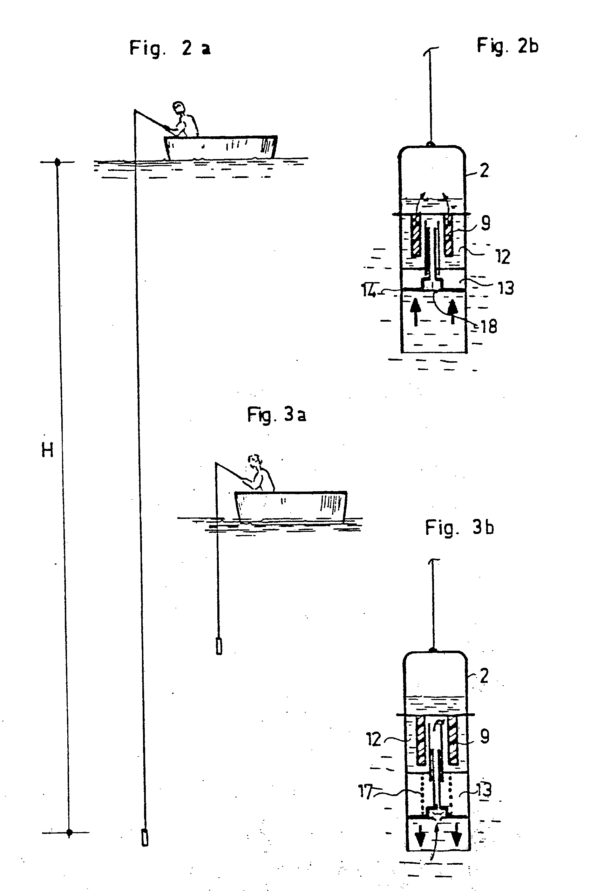

Les figures 2a, 2b, 3a et 3b illustrent le fonctionnement et l'utilisation du dispositif de survie décrit.

Après avoir rempli d'eau de mer la chambre haute pression 12 et encliqueté le réservoir 2, l'utilisateur immerge le dispositif, notamment au moyen d'une courte canne et d'un moulinet sur lequel s'enroule le câble d'accrochage. La hauteur H d'immersion peut être de l'ordre de 20 mètres (Fig. 2a). A cette profondeur la pression extérieur d'environ 2 bars s'applique sur la surface $S_1$ du piston, repousse celui-ci en soumettant par l'entremise de la surface $s_1$ l'eau de la chambre haute pression 12 à une pression d'environ 50 bars. Cette pression est de l'ordre du double de la pression osmotique d'une eau de mer de salinité moyenne (de l'ordre de 35 g/l) et le phénomène d'osmose inverse se déroule avec une vitesse de filtration rapide à travers la membrane 9. Au fur et à mesure de la filtration, le piston est repoussé (Fig. 2b) jusqu'à parvenir en fin de course côté chambre haute pression, lorsqu'un volume d'eau douce égal au volume d'eau déplacé par le piston dans le chambre 12 et le cylindre 15 est filtré.

L'opérateur remonte alors le dispositif (Fig. 3a). La pression externe décroît et le piston est repoussé par le ressort 17 pour revenir vers sa position initiale. La pression intérieure régnant dans la chambre 12 décroit alors brusquement, ce qui entraîne une ouverture du clapet 18 sous l'action de la pression externe (Fig. 3b). Une dose d'eau de mer est aspirée vers la chambre 12 qui se remplit à nouveau. L'opérateur peur redescendre le dispositif en vue de renouveler les opérations et de produire une nouvelle dose d'eau douce et ce, jusqu'à remplir le réservoir 2.

Lorsque celui-ci contient une quentité d'eau douce jugée suffisante, l'opérateur le sépare du corps, en prélève l'eau, effectue un rinçage de la membrane et peut commencer un nouveau cycle.

Il est à noter qu'au lieu d'un clapet unique 18, le dispositif peut être équipé d'un système de clapets du type de ceux des versions décrites ci-après, qui assurant un balayage automatique de la chambre haute pression 12 et un rinçage de celle-ci à chaque remontée.

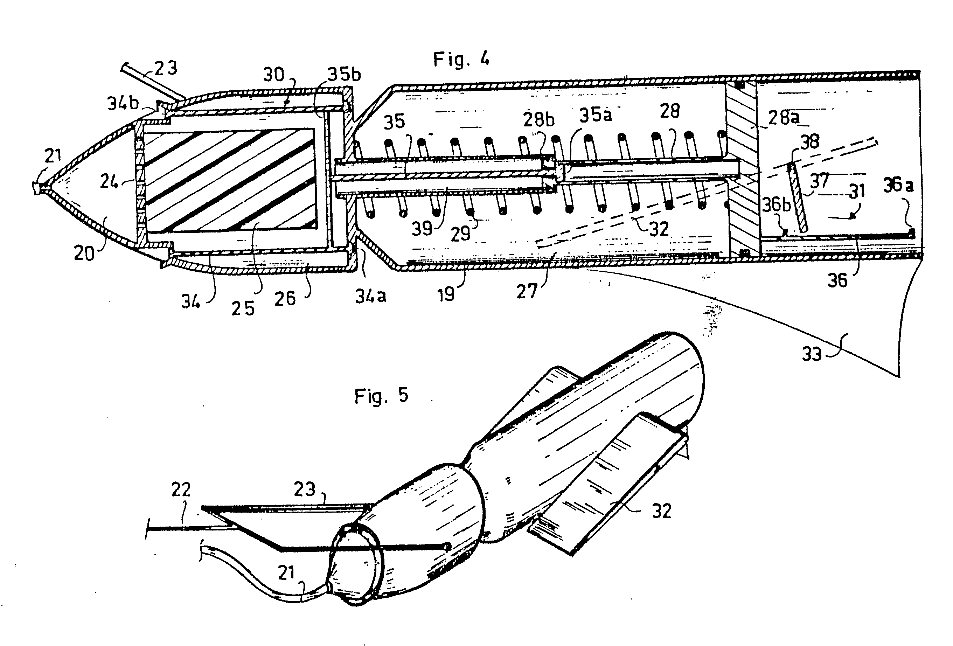

Les figures 4 et 5 représentent à titre d'exemple un dispositif d'approvisionnement d'un bateau en eau douce, dispositif destiné à être traîne à l'arrière dudit bateau.

Ce dispositif comprend un corps 19 ayant un profil hydrodynamique, en particulier une forme ogivale à l'avant et cylindrique à l'arrière; ce corps peut être réalisé en une ou plusieurs pièces et, à titre indicatif, son volume peut être de l'ordre d'une dizaine à une vingtaine de litres.

A l'avent, le corps 19 forme une chambre 20 de recueil d'eau douce à laquelle est connecté un conduit souple d'écoulement 21. Le conduit remonte jusqu'au bateau et est lié sur son parcours à un câble 22 de traction du dispositif; en l'exemple, ce câble 22 est attaché à la partie avant du dispositif par l'entremise d'un étrier 23 articulé sur celui-ci.

La chambre 20 est fermée à sa partie arrière par un support 24 qui porte une membrane semi-perméable d'osmose inverse 25. Une des faces actives de cette membrane est en communication avec la chambre 20 par des lumières pratiquées dans le support 24, cependant que l'autre face active est plongée dans une chambre haute pression 26 que délimite le corps.

Comme pour le dispositif précédent, le troisième étage est constitué par une chambre sous atmosphère gazeuse 27 contenant un piston 28 constitué par un disque 28a de surface utile $S_2$ qui se déplace dans le cylindre formant la chambre 27 et par une extension axiale ayant une extrémité 28b de surface utile $s_2$ qui se déplace dans un cylindre creux 39 s'étendant entre la chambre haute pression 26 et la chambre sous atmosphère gazeuse 27. En outre, un ressort de rappel 29 tend à écarter le piston 28 de la chambre haute pression 26. (A titre indicatif, la surface utile $S_2$ peut être de l'ordre de 300 cm2 et la surface utile $s_2$ de l'ordre de 12 cm2).

Par ailleurs, ce dispositif est muni, d'une part, d'un système de clapets 30 adapté pour autoriser un balayage de la chambre haute pression 26 par l'eau de mer au cours des remontées, d'autre part, d'un mécanisme de manoeuvre 31 agencé pour manoeuvrer des volets orientables tels que 32 qui commandent l'engin sur son axe de tangage; des moyens de stabilisation de type classique, tels qu'aileron 33 aussurent une assiette sensiblement constante de l'engin autour de son axe longitudinal.

Le système de clapets 30 comprend une ou plusieurs tiges 34 à double clapets 34a, 34b, qui sont disposées dans la chambre haute pression 26 autour de la membrane 25. Les clapets 34a, 34b de ces tiges coopèrent avec des orifices, en l'exemple à portée conique, qui sont ménagés en positions opposées dans la chambre haute pression et qui débouchent à l'extérieur.

La ou les tiges 34 à double clapets sont solidaires d'un organe de commande 35 qui est lié au piston 28 de façon à être actionné dans le sens de l'ouverture des clapets lorsque ledit piston parvient en fin de course vers la chambre haute pression 26 et dans le sens de la fermeture lorsque le piston parvient en fin de course opposée.

En l'exemple, l'organe 35 comprend une tige axiale dotée d'un embout de butée 35a et assujettie à une pièce de liaison 35b la rendant solidaire des tiges 34. L'embout de butée 35a est actionné par l'extrémité 28b du piston pour engendrer la fermeture des clapets et par la partie centrale interne du disque 28a pour engendrer l'ouverture en fin de course opposée.

En outre, un système d'encliquetage de type classique (non représenté) maintient les clapets dans la position ouverte ou fermée, commandée par l'organe 35 ci-dessus évoqué. Il est à noter que, pour la position fermée, l'écoulement de l'eau autour de l'engin assure un effet de rappel naturel, permettant le cas échéant de ne prévoir un encliquetage que dans la position ouverte.

Par ailleurs, le mécanisme de manoeuvre 31 des volets 32 peut très simplement comprendre une réglette 36 solidaire du piston; cette réglette est munie de deux butées de fin de course 36a et 36b avec lesquelles peut venir en contact un bras de manoeuvre 37 solidaire de l'axe d'articulation 38 qui porte les volets. Les butées 36a et 36b sont positionnées de sorte que le contact avec le bras 37 se produise légèrement avan les deux fins de course du piston.

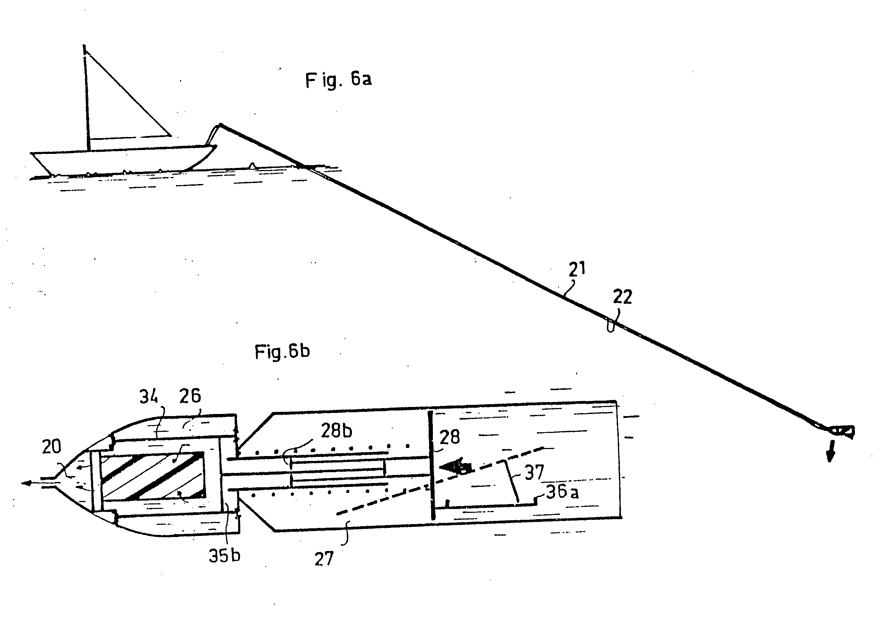

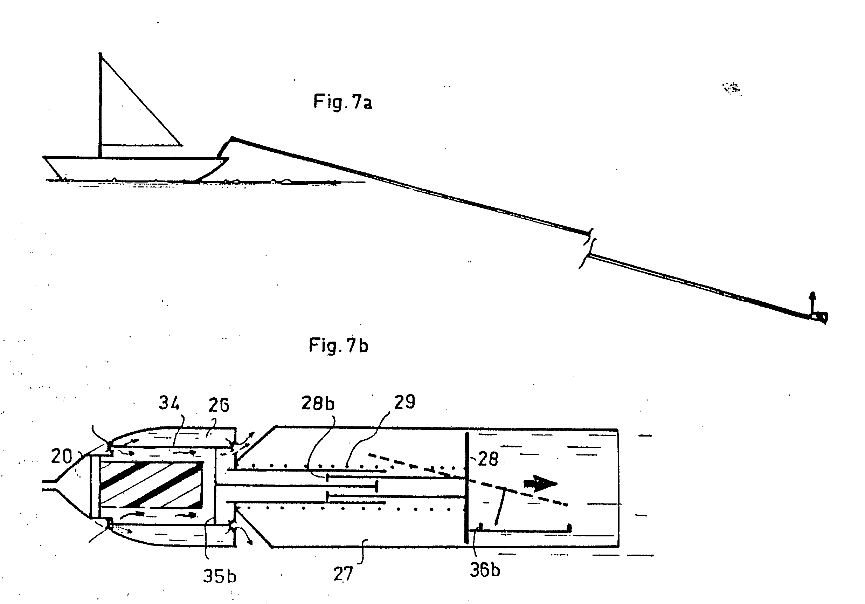

Les figures 6a, 6b et 7a, 7b permettent de mieux comprendre le fonctionnement du dispositif ci-dessus décrit.

Ce dispositif est traîné à l'arrière d'un bateau au moyen du câble 22 d'une cinquantaine de mètres de longueur de façon à pouvoir plonger à une profondeur de 20 mètres environ avec une inclinaison du câble inférieur à 30°.

Si l'on suppose le dispositif en cours de descente (Fig. 6a), les volets 32 situés à l'arrière de l'engin sont orientés comme le montre la figure 6b avec une inclinaison vers le bas et vers l'avent; l'écoulement de l'eau sur ces volets tend à faire pivoter l'engin vers le bas jusqu'à une profondeur où le couple exercé par les volets autour de l'axe de tangage est compensée par la traction du câble.

Au voisinage de cette profondeur (qui peut être ajustée à environ 20 mètres par une géométrie appropriée des volets), la pression extérieure de 2 bars repousse le piston 28 et produit une pression de 50 bars dans la chambre haute pression 26. Comme dans le dispositif précédent, le phénomène d'osmose inverse se produit et l'eau douce filtre vers la chambre de recueil 20 et s'écoule dans le conduit 21.

Lorsque le piston 28 a été entièrement repoussé vers l'avant, il déclenche deux actions:

· une ouverture du système à clapets 34 par poussée de la partie centrale interne du disque 28a contre l'embout de butée 35a,
· un pivotement des volets 32 dans le sens de la remontée par déplacement du bras 37 au contact de la butée de fin de course 36a.

L'engin remonte alors (Fig. 7a) et sa chambre haute pression est balayée et rincée par l'eau de mer qui s'écoule dans celle-ci, entrant par les orifices avant et sortant par les orifices arrière.

La force exercée par le ressort de rappel 29 repousse le piston 28 vers l'arrière (Fig. 7b) et, au voisinage de la surface où la pression ambiante est faible, le piston se retrouve en position arrière. Il déclenche alors deux actions opposées à celles déjà décrites, à savoir la fermeture des clapets 34 et le pivotement des volets 32 dans le sens de la descente.

Un nouveau cycle de production d'eau douce peut alors s'amorcer. Il est à noter qu'en fonction des caractéristiques du dispositif et de la pression d'eau obtenue dans la chambre de recueil 20, l'eau douce peut s'écouler vers le bateau par le conduit 21, soit seulement en cours de remontée (lorsque la pression externe correspondant à la profondeur devient inférieure à la pression de la chambre de recueil 20), soit au cours du palier bas et des remontées (si la pression obtenue dans la chambre de recueil est supérieure à la pression externe correspondant à la profondeur de palier).

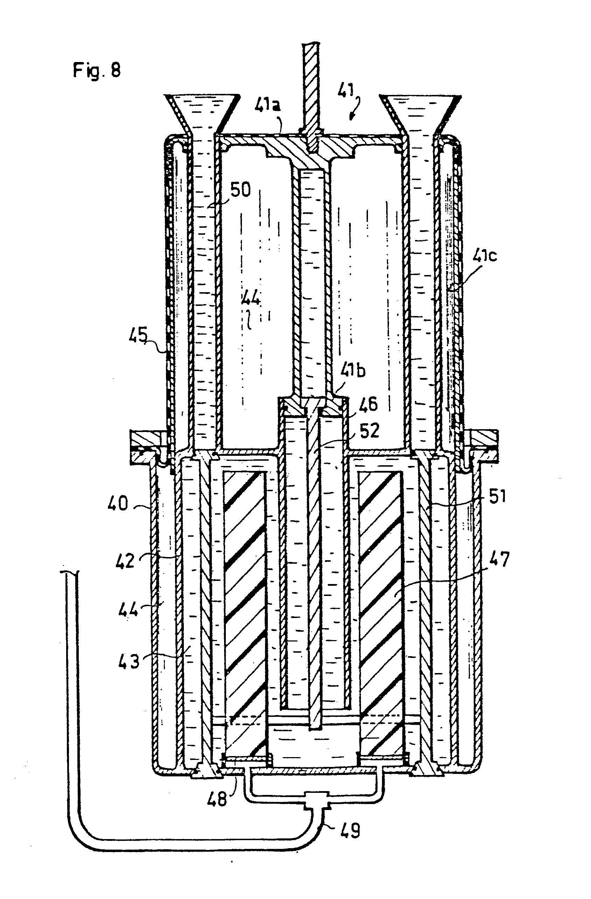

Par ailleurs, la figure 8 représente à titre d'exemple une autre version du dispositif, fonctionnant selon les mêmes principes de base que ceux déjà décrits; ce dispositif est destiné à produire industriellement de l'eau douce à partir d'une plateforme côtière.

Il comprend un corps cylindrique 40 dont le volume est de l'ordre de 1 à quelques m3. Ce corps est équipé, d'une part, en guise de piston robile, d'une cloche 41 qui peut pénétrer dans celui-ci, d'autre part, d'une cloison cylindrique 42 qui est disposée dans ledit corps et réalise la séparation entre une chambre haute pression centrale 43 et une chambre sous atmosphère gazeuse 44 (laquelle s'étend à la périphérie de la cloison 42 ainsi que dans le volume de la cloche 41).

L'étanchéité entre le corps 40 et le cloche 41 est assurée par une membrane souple 45 en élastomère cu analogue; cette membrane est étanchément fixée le long de sa bordure sur le pourtour du corps 40 par des moyens classiques.

La cloche 41 comporte une face circulaire 41a de surface utile $S_3$, une paroi cylindrique latérale 41c qui est apte à s'insérer dans le corps 40 entre ce dernier et la cloison 42, et une extension axiale 41b ayant une extrémité de surface utile $s_3$.

Comme précédemment, cette extension 41b peut pénétrer dans un cylindre creux 46 de section conjuguée, qui s'étend entre la chambre haute pression 43 et la chambre sous atmosphère gazeuse 44. (A titre indicatif, la surface $S_3$ peut être de l'ordre de 0,5 m2 et la surface utile $s_3$ de l'ordre de 0,02 m2).

En l'exemple, la chambre haute pression 43 contient une pluralité de membranes semi-perméables sélectives d'osmose inverse telles que 47, réparties autour du cylindre creux 46, chaque membrane présente la forme d'un doigt et peut être du type à fibres creuses.

Chaque membrane 47 est maintenue par un support 48 de type connu, qui autorise le passage de l'eau douce ayant filtré à travers la membrane vers un conduit de recueil (l'ensemble de ces conduits formant la chambre de recueil) et ensuite vers un collecteur 49 qui remonte vers la surface.

Le dispositif comprend en outre des cheminées 50 d'arrivée d'eau de mer vers la chambre haute pression 43 et un système à clapets 51 d'un type analogue à celui du dispositif précédent, mu par un mécanisme analogue de manoeuvre 52 lorsque le piston parvient en fin de course dans un sens ou dans l'autre.

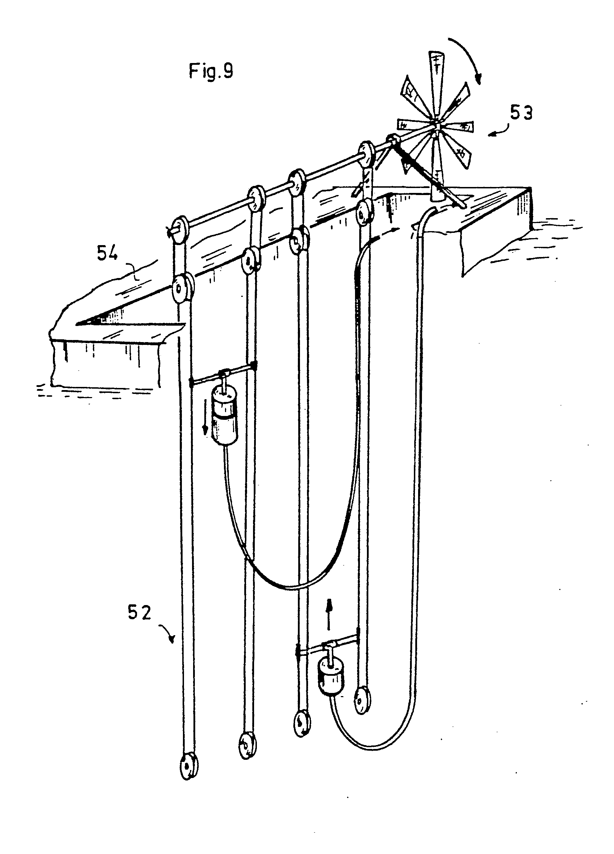

Comme le montre la figure 9, plusieurs dispositifs du type ci-dessus décrit peuvent être associés dans une installation de production d'eau, comprenant des moyens adaptés pour les monter et descentre alternativement depuis la surface jusqu'à une profondeur de l'ordre de 20 m. Ces moyens peuvent être de tout type, notamment un système à câble 52 coopérant avec des poulies ou treuils qui sont entraînés par un organe moteur 53 porté par une plateforme 54.

La figure 9 montre à titre d'exemple un système d'entraînement continu par éolienne, fonctionnant avec un seul sens de rotation au niveau de l'arbre moteur.

La production d'eau douce par osmose inverse s'effectue selon les mêmes principes que dans les dispositifs pre'cédents. Il est à remarquer toutefois que le dispositif est accroché par l'entremise de la cloche 41 aux moyens de suspension, ce qui supprime la nécessité de prévoir un ressort de rappel: en effet, la cloche 41 (qui joue le rôle de piston) s'écarte du corps 40 pendant les remontées, après ouverture des clapets, par la seule action du poids de l'engin.

Il est à noter, notamment dans ce dernier mode de réalisation, que la chambre sous atmosphère gazeuse 44 peut être équipée d'un conduit de purge de l'air, la mettant en communication avec la surface.

## Revendications

1. Dispositif de production d'eau douce à partir d'eau de mer, appelé à être immergé au coeur du milieu marin, ledit dispositif étant équipé d'au moins une membrane semi-perméable sélective (9, 25; 47) adaptée pour réaliser une filtration par osmose inverse de l'eau de mer et comprenant:

· des moyens de recueil de l'eau douce produite (2; 20, 21; 48, 49),
· une chambre dite chambre haute pression (12; 26; 43), munie de la ou des membranes semi-perméables, chaque membrane étant interposée entre ladite chambre haute pression et les moyens de recueil de l'eau douce de sorte qu'une des faces actives de la membrane communique avec lesdits moyens de recueil et que l'autre face active communique avec ladite chambre haute pression,
· un piston mobile (14; 28; 41) dans une chambre sous atmosphère gazeuse (13; 27; 44), l'ensemble chambre-piston étant adapté pour autoriser le déplacement dudit piston en assurant l'étanchéité avec le milieu extérieur à la chambre et le piston étant agencé de telle façon qu'une face (14b; 28b; 41b) de ce piston de surface utile s puisse pénétrer de façon étanche et sur une profondeur variable dans la chambre haute pression (12; 26; 43), la face opposée (14a; 28a; 41a) du piston étant à la pression du milieu extérieur et ayant une surface utile S supérieure à la surface s.

2. Dispositif selon la revendication 1, dans lequel les moyens de recueil de l'eau douce comprennent un réservoir (2) doté de moyens d'extraction de l'eau recueillie (5, 6).

3. Dispositif selon la revendication 2, caractérisé en ce que le réservoir de recueil d'eau douce (2) est fixé de façon amovible en bout de la chambre haute pression (12), la ou les membranes semi-perméables (9) étant assujetties sur ledit réservoir par l'entremise d'un support perméable (7, 8), de façon qu'elles s'insèrent dans la chambre haute pression lorsque le réservoir est mis en place et fixé sur celle-ci.

4. Dispositif selon la revendication 1, caractérisé en ce que les moyens de recueil de l'eau douce comprennent une chambre (20), pourvue d'un conduit souple d'écoulement de l'eau douce (21, 49).

5. Dispositif selon l'une des revendications 1, 2, 3 ou 4 dans lequel chaque membrane semi-perméable est constituée par une multitude de fibres creuses capillaires en forme de boucle.

6. Dispositif selon l'une des revendications 1, 2, 3, 4 ou 5, caractérisé en ce qu'il comprend des moyens de rappel logés dans la chambre sous atmosphère gazeuse et agencés pour solliciter le piston dans le sens de son écartement par rapport à la chambre haute pression.

7. Dispositif selon l'une des revendications 1, 2, 3, 4, 5 ou 6, caractérisé en ce qu'il comprend un système à clapet (18; 30; 51) pour l'admission d'eau de mer dans la chambre haute pression.

8. Dispositif selon la revendication 7, caractérisé en ce que le système à clapet comporte un clapet (18), agencé pour autoriser l'admission d'eau vers la chambre haute pression lorsque la pression de ladite chambre devient inférieure à la pression extérieure à une constante de tarage près.

9. Dispositif selon la revendication 7, caractérisé en ce que le système à clapet (30; 51) est adapté pour assurer un balayage d'eau de mer dans la chambre haute pression.

10. Dispositif selon la revendication 9, caractérisé en ce que le système à clapet (30, 51) comprend:

· au moins une tige (34) à double clapets (34a; 34b) coopérant avec des orifices de la chambre haute pression situés en position opposée dans cette chambre et débouchant à l'extérieur,
· un organe de commande (35, 52) solidaire de la ou des tiges à double clapets et lié au piston (28; 41) de façon à être actionné dans le sens de l'ouverture des clapets lorsque ledit piston parvient en fin de course vers la chambre haute pression, et dans le sens de la fermeture lorsque le piston parvient en fin de course opposée.

11. Dispositif selon l'une des revendications 1, 2, 3, 4, 5, 6, 7, 8, 9 ou 10, caractérisé en ce que la face (14b; 28b; 41b) de surface utile s du piston est logée dans un cylindre (15; 39; 46) de section conjuguée s'étendant entre la chambre à haute pression et la chambre sous atmosphère gazeuse, ladite face de piston étant dotée d'un joint périphérique d'étanchéîté en pression dans ledit cylindre.

12. Dispositif selon la revendication 11, caractérisé en ce que la face (14a; 28a) de surface utile S du piston est formée par la face externe d'un disque cylindrique séparant la chambre sous atmosphère gazeuse de l'extérieur, ladite chambre sous atmosphère gazeuse étant délimitée par un cylindre creux de section interne conjuguée de celle du disque en vue de guider ce dernier et assurer l'étanchéité par l'entremise d'un joint périphérique que comporte ledit disque.

13. Dispositif selon la revendication 11 caractérisé en ce que le piston est formé par une cloche (41) constituée d'une face circulaire (41a) de surface utile S, d'une paroi cylindrique latérale (41c) et d'une extension axiale (41b) formant la face de surface utile s, la chambre sous atmosphère gazeuse étant délimitée par ladite cloche (41) et par un corps cylindrique (40) adapté pour contenir ladite cloche, une membrane souple d'étanchéité (45) étant prévue entre ladite cloche et ledit corps.

14. Dispositif selon l'une des revendications précédentes, caractérisé en ce que le piston mobile (14; 28; 41) est réalisé de sorte que le rapport des surfaces utiles S/s des faces soit approximativement compris entre 15 et 40.

15. Dispositif selon l'une des revendications précédentes, caractérisé en ce qu'il présente une forme générale approximativement cylindrique.

16. Dispositif selon l'une des revendications précédentes, destiné à jouer le rôle d'appareil de survie pour fournir de l'eau douce à des naufragés, caractérisé en ce qu'il présente un volume approximativement compris entre 0,5 et 2 litres et comprend un moyen de fixation (4) d'un câble en vue de son immersion.

17. Dispositif selon les revendications 3 et 16 prises ensemble, caractérisé en ce que le réservoir d'eau douce (2) en particulier en matière transparente est fixé de façon amovible en bout de la chambre haute pression (12) par un système d'encliquetage rapide (3).

18. Dispositif selon l'une des revendications 1 à 15, destiné à être traîné à l'arrière d'un bateau en vue d'approvisionner celui-ci en eau douce, caractérisé en ce qu'il se présente sous la forme d'un corps (19) ayant un profil hydro-dynamique et un volume compris entre quelques litres et quelques dizaines de litres, ce corps étant associé à des moyens de traction (22, 23) fixés à sa partie avant.

19. Dispositif selon les revendications 4 et 18 prises ensemble, caractérisé en ce que le conduit souple d'écoulement de l'eau douce (21) est lié aux moyens de traction (22) en vue de remonter jusqu'au bateau.

20. Dispositif selon les revendications 9 et 18 prises ensemble, caractérisé en ce qu'il comprend à l'extérieur du corps (19) au moins un volet orientable (32) agencé pour engendrer la montée ou la descente du dispositif en fonction de sa position, un mécanisme (31) de manoeuvre desdits volets étant associé au piston (28) de façon à commander lesdits volets, d'une part, vers la position de remontée lorsque le piston parvient en fin de course vers la chambre haute presson, d'autre part, vers la position de descente lorsque le piston parvient en fin de course opposée.

21. Dispositif selon l'une des revendications 1 à 15, destiné à la production industrielle d'eau douce à partir d'une plateforme côtière (54) du analogue, caractérisé en ce qu'il présente un volume approximativement compris entre quelques centaines de litres et quelques dizaines de m3.

22. Dispositif selon la revendication 21, caractérisé en ce qu'il est associé à une installation de montée et descente portée par la plateforme (54).

23. Dispositif selon l'une des revendications précédentes, caractérisé en ce que la chambre sous atmosphère gazeuse est équipée d'un conduit de purge d'air, la mettant en communication avec la surface.

**Patentansprüche**

1. Vorrichtung zur Erzeugung von Süsswasser aus Meereswasser, zum Eintauchen in das Meereswasser-Medium vorgesehen, wobei besagte Vorrichtung mit mindestens einer wahlweise zu gebrauchenden, zur Filtrierung des Meereswassers mittels Umkehrosmose befähigten, halbdurchlässigen Membrane (9, 25; 47) versehen ist, umfassend

— Mittel (2; 20, 21; 48, 49) zum Auffangen des erzeugten Süsswassers,
— einen mit der oder den halbdurchlässigen Membrane oder Membranen versehenen Raum, den sog. Hochdruckraum (12; 26; 43), wobei die Membranen jeweils zwischen besagtem Hochdruckraum und die Süsswasser-Auffangmittel eingebracht sind, sodass eine der aktiven Flächen der Membrane in Verbindung mit besagten Auffangmitteln steht und die andere aktive Fläche in Verbindung mit besagtem Hochdruckraum steht, und
— einen beweglichen Kolben (14; 28; 41) in einem unter gasförmiger Atmosphäre stehenden Raum (13; 27; 44), wobei die Raum-und-Kolben-Zusammensetzung dazu befähigt ist, das Verschieben des besagten Kolbens zu ermöglichen, und dabei die Dichtheit des Raums gegen das Aussenmedium sichert, wobei der Kolben so eingerichtet ist, dass eine Fläche (14b; 28b; 41b) dieses Kolbens mit einer wirksamen Oberfläche s dichtend bis in eine regelbare Tiefe in den Hochdruckraum (12; 26; 43) eindringen kann und wobei die entgegengesetzte Fläche (14a; 28a; 41a) des Kolbens unter dem Druck des Aussenmediums steht und eine wirksame Oberfläche S aufweist, welche grösser ist als die Oberfläche s.

2. Vorrichtung nach Anspruch 1, bei welcher die Süsswasser-Auffangmittel ein mit Entnahmemitteln (5, 6) für das aufgefangene Wasser ausgestattetes Vorratsbecken (2) umfassen.

3. Vorrichtung nach Anspruch 2, dadurch gekennzeichnet, dass das Auffangbecken für Süsswasser (2) am Ende des Hockdruckraums (12) abnehmbar befestigt ist, wobei die halbdurchlässige Membrane oder halbdurchlässigen Membranen (9) an besagtem Vorratsbecken mittels einer durchlässigen Stütze (7, 8) so angebracht ist oder sind, dass sie sich in den Hochdruckraum einfügt oder einfügen, wenn das Vorratsbecken eingesetzt und an diesem befestigt wird.

4. Vorrichtung nach Anspruch 1, dadurch gekennzeichnet, dass die Süsswasser-Auffangmittel einen mit einem biegesamen Ausflussrohr (21, 49) für das Süsswasser versehenen Raum (20) umfassen.

5. Vorrichtung nach einem der Ansprüche 1, 2, 3 oder 4, bei welcher die halbdurchlässigen Membranen jeweils aus einer Vielzahl von in Kreppform gebildeten Hohlkapillarfasern bestehen.

6. Vorrichtung nach einem der Ansprüche 1, 2, 3, 4 oder 5, dadurch gekennzeichnet, dass sie Rücklaufmittel umfasst, welche in dem unter gasförmiger Atmosphäre stehenden Raum untergebracht und dazu eingerichtet sind, den Kolben zu beaufschlagen, um ihn von dem Hochdruckraum fortzuschieben.

7. Vorrichtung nach einem der Ansprüche 1, 2, 3, 4, 5 oder 6, dadurch gekennzeichnet, dass sie eine Ventileinrichtung (18; 30; 51) zum Einlass von Meereswasser in den Hochdruckraum umfasst.

8. Vorrichtung nach Anspruch 7, dadurch gekennzeichnet, dass die Ventileinrichtung ein Ventil (18) enthält, welches so angeordnet ist, dass es den Zufluss von Wasser in den Hochdruckraum ermöglicht, wenn der Druck in besagtem Raum unter den Aussendruck um eine Eichkonstante fällt.

9. Vorrichtung nach Anspruch 7, dadurch gekennzeichnet, dass die Ventileinrichtung (30; 51) dazu befähigt ist, die Einspülung von Meereswasser in den Hochdruckraum zu veranlassen.

10. Vorrichtung nach Anspruch 9, dadurch gekennzeichnet, dass die Ventileinrichtung (30; 51)

— mindestens einen Stab (34) mit Doppelventilen (34a; 34b), welche mit gegenüber im Hochdruckraum angeordneten und nach aussen mündenden Öffnungen dieses Raums zusammenwirken, und
— ein mit dem Doppelventil-Stab oder den Doppelventil-Stäben einstückig verbundenes und an den Kolben (28; 41) so angeschlos-senes Steuerorgan (35, 52), dass es in Richtung zur Öffnung der Ventile betrieben wird, wenn besagter Kolben das Ende des Hubs gegen den Hockdruckraum erreicht, und in Richtung zur Schliessung, wenn der Kolben das Ende des entgegengesetzten Hubs erreicht, umfasst.

11. Vorrichtung nach einem der Ansprüche 1, 2, 3, 4, 5, 6, 7, 8, 9 oder 10, dadurch gekennzeichnet, dass die Kolbenfläche (14b; 28b; 41b) mit wirksamer Oberfläche s in einem Zylinder (15; 39; 46) untergebracht ist, welcher einen entsprechenden Querschnitt aufweist und sich zwischen dem Hochdruckraum und dem unter gasförmiger Atmosphäre stehenden Raum erstreckt, wobei besagte Kolbenfläche mit einer in besagtem Zylinder unter Druck gehaltenen Umfangsdichtungsnaht versehen ist.

12. Vorrichtung nach Anspruch 11, dadurch gekennzeichnet, dass die Kolbenfläche (14a; 28a) mit wirksamer Oberfläche S durch die Aussenfläche einer zylinderförmigen Scheibe gebildet wird, welche den unter gasförmiger Atmosphäre stehenden Raum nach aussen abschliesst, wobei besagter unter gasförmiger Atmosphäre stehender Raum durch einen Hohlzylinder begrenzt ist, dessen innerer Querschnitt dem der Scheibe entspricht, um diese zu führen und für Dichtheit mit Hilfe einer in besagter Scheibe enthaltenen Umfangsdichtung zu sorgen.

13. Vorrichtung nach Anspruch 11, dadurch gekennzeichnet, dass der Kolben durch eine Glocke (41) gebildet wird, welche aus einer runden Fläche (41a) mit wirksamer Oberfläche S, einer zylinderförmigen Seitenwand (41c) und einer axialen, die Fläche mit wirksamer Oberfläche s bildenden Verlängerung (41b) besteht, wobei der unter gasförmiger Atmosphäre stehende Raum durch besagte Glocke (41) und durch einen zum Beinhalten besagter Glocke befähigten, zylinderförmigen Körper (40) begrenzt ist und wobei eine biegsame Dichtungsmembrane (45) zwischen besagter Glocke und besagtem Körper vorgesehen ist.

14. Vorrichtung nach einem der vorhergehenden Ansprüche, dadurch gekennzeichnet, dass der bewegliche Kolben (14; 28; 41) so gefertigt ist, dass das Verhältnis der wirksamen Oberflächen, S:s, seiner Flächen ungefähr zwischen 15 und 40 liegt.

15. Vorrichtung nach einem der vorhergehenden Ansprüche, dadurch gekennzeichnet, dass sie eine ungefähr zylinderförmige allgemeine Form aufweist.

16. Vorrichtung nach einem der vorhergehenden Ansprüche, welche dazu bestimmt ist, die Rolle einer Überlebensauslen, dadurch gekennzeichnet, dass sie einen zwischen 0,5 und 2 Litern liegenden Rauminhalt aufweist und ein Taukopplungsmittel (4) zum Untertauchen umfasst.

17. Vorrichtung nach den Ansprüchen 3 und 16 zusammen, dadurch gekennzeichnet, dass das Süsswasser-Vorratsbecken (2), welches insbesondere aus durchsichtigem Werkstoff besteht, am Ende des Hochdruckraums (12) durch eine Einschnapp-Einrichtung (3) abnehmbar befestigt ist.

18. Vorrichtung nach einem der Ansprüche 1 bis 15, welche dazu bestimmt ist, hinter einem Schiff her geschleppt zu werden, um dieses mit Süsswasser zu versorgen, dadurch gekennzeichnet, dass sie die Form eines Körpers (19) mit einem hydrodynamischen Profil und einem zwischen einigen Litern und einigen Zehnern von Litern liegenden Rauminhalt annimt, wobei dieser Körper an seinem Vorderteil befestigten Zugmitteln (22, 23) zugeordnet ist.

19. Vorrichtung nach den Ansprüche 4 und 18 zusammen, dadurch gekennzeichnet, dass das biegsame Ausflussrohr für das Süsswasser (21) mit den Zugmitteln (22) verbunden ist, um bis zum Schiff anzusteigen.

20. Vorrichtung nach den Ansprüche 9 und 19 zusammen, dadurch gekennzeichnet, dass sie auf der Aussenseite des Körpers (19) mindestens einen regelbaren Flügel (32) umfasst, welcher so betrieben wird, dass er die Vorrichtung je nach ihrer Stellung steigen oder sinken lässt, wobei ein Betriebsmechanismus (31) für besagte Flügel dem Kolben (28) so zugeordnet ist, dass er besagte Flügel einerseits in die Steigestellung steuert, wenn der Kolben das Ende des Hubs gegen den Hochdruckraum erreicht, und andererseits in die Absenkstellung, wenn der Kolben das Ende des entgegengesetzten Hubs erreicht.

21. Vorrichtung nach einem der Ansprüche 1 bis 15, welche zur grosstechnischen Erzeugung von Süsswasser von einer Küstenplattform (54) oder dergl. aus bestimmt ist, dadurch gekennzeichnet, dass sie einen zwischen etwa einigen Hunderten von Litern und einigen Zehnern von Kubikmetern liegenden Ruaminhalt aufweist.

22. Vorrichtung nach Anspruch 21, dadurch gekennzeichnet, dass sie einer von der Plattform (54) getragenen Hebe- und Absenkanlage zugeordnet ist.

23. Vorrichtung nach einem der vorhergehenden Ansprüche, dadurch gekennzeichnet, dass der unter gasförmiger Atmosphäre stehende Raum mit einem Entlüftungsrohr versehen ist, welches ihn mit der Oberfläche in Verbindung bringt.

**Claims**

1. Apparatus for producing fresh water from sea water, for immersion in a marine medium, said apparatus being provided with at least one selective semi-permeable membrane (9, 25; 47), designed to produce reverse osmosis filtration of the sea water and comprising:

— means (2; 20, 21; 48, 49) for collecting the fresh water produced;
— a chamber, so-called high pressure chamber (12; 26; 43), provided with the semi-permeable membrane(s), each membrane being placed between said high pressure chamber and the fresh water collecting means, so that one of the active surfaces of the membrane communicates with said collecting means and the other active surface communicates with said high pressure chamber; and
— a mobile piston (14; 28; 41) in a chamber placed under a gaseous atmosphere (13; 27; 44), the chamber/piston assembly being designed for enabling said piston to be moved, ensuring that the chamber is tightly sealed from the outer medium, this piston being arranged so that one surface (14b; 28b; 41b) of this piston, having an effective surface area s, can penetrate under seal to a variable depth into the high pressure chamber (12; 26; 43), the opposite surface (14a; 28a; 41a) of the piston being at the pressure of the outer medium and having an effective surface area S which is greater than the surface area s.

2. Apparatus according to Claim 1, wherein the fresh water collecting means comprise a reservoir (2) provided with means (5, 6) for withdrawing the water collected.

3. Apparatus according to Claim 2, characterised in that the reservoir for collecting fresh water (2) is fastened detachably at the end of the high pressure chamber (12), the semi-permeable membrane(s) (9) being fixed to said reservoir by means of a permeable support (7, 8), so that it (they) enter(s) the high pressure chamber when the reservoir is put in place and fastened to it.

4. Apparatus according to Claim 1, characterised in that the fresh water collecting means comprise a chamber (20) provided with a flexible drainage duct (21, 49) for the fresh water.

5. Apparatus according to one of the Claims 1, 2, 3 or 4, wherein each semi-permeable membrane consists of a plurality of hollow capillary fibres forming a nap.

6. Apparatus according to one of the Claims 1, 2, 3, 4 or 5, characterised in that it comprises return means, accommodated in the chamber placed under gaseous atmosphere and designed to act on the piston so as to move it away from the high pressure chamber.

7. Apparatus according to one of the Claims 1, 2, 3, 4, 5 or 6, characterised in that it comprises a valve system (18; 30; 51) for the inlet of sea water into the high pressure chamber.

8. Apparatus according to Claim 7, characterised in that the valve system comprises a valve (18), designed to enable water to be let into the high pressure chamber when the pressure in said chamber drops below the external pressure by a calibrated constant.

9. Apparatus according to Claim 7, characterised in that the valve system (30; 51) is designed to flush sea water into the high pressure chamber.

10. Apparatus according to Claim 9, characterised in that the valve system (30; 51) comprises:

— at least one rod (34) with dual valves (34a; 34b), interacting with orifices in the high pressure chamber located on the opposite side in that chamber and issuing to the outside; and
— a control element (35, 52), integrated with the dual valve rod(s) and connected to the piston (28; 41), so that it is operated in the direction of the valves opening, when said piston reaches the end of the stroke towards the high pressure chamber, and in the direction of the valves closing when the piston reaches the end of the opposite stroke.

11. Apparatus according to one of the Claims 1, 2, 3, 4, 5, 6, 7, 8, 9 or 10, characterised in that the piston surface (14b; 28b; 41b), having an effective surface area s, is accommodated in a cylinder (15; 39; 46) of corresponding cross-section and extending between the high pressure chamber and the chamber placed under gaseous atmosphere, said piston surface being provided with a peripheral sealing joint, pressurised in said cylinder.

12. Apparatus according to Claim 11, characterised in that the piston surface (14a; 28a), having an effective surface area S, is formed by the outer surface of a cylindrical disk, separating the chamber placed under gaseous atmosphere from the outside, said chamber placed under gaseous atmosphere being bounded by a hollow cylinder whose internal cross-sectional area corresponds to that of the disk, with a view to guiding the latter and ensuring tightness by means of a peripheral seal contained in said disk.

13. Apparatus according to Claim 11, characterised in that the piston is formed by a bell (41), consisting of a circular surface (41a) having an effective surface area S, a cylindrical side wall (41c) and an axial extension (41b) forming the surface having an effective surface area s, the chamber placed under gaseous atmosphere being bounded by said bell (41) and by a cylindrical body (40) designed to contain said bell, a flexible sealing membrane (45) being provided between said bell and said body.

14. Apparatus according to one of the preceding claims, characterised in that the mobile piston (14; 28; 41) is made such that the ratio of the effective surface areas, S:s, of its surfaces lies approximately between 15 and 40.

15. Apparatus according to one of the preceding claims, characterised in that it has an approximately cylindrical general shape.

16. Apparatus according to one of the preceding claims, intended to act as survival equipment for supplying fresh water to shipwrecked persons, characterised in that it has a volume approximately between 0.5 and 2 litres and comprises a cable hook-up means (4) for its immersion.

17. Apparatus according to Claims 3 and 16 taken together, characterised in that the fresh water reservoir (2), which is preferably made of transparent material, is fastened detachably at the end of the high pressure chamber (12) by a snap-in system (3).

18. Apparatus according to one of the Claims 1 to 15, intended to be towed behind a boat for supplying the latter with fresh water, characterised in that it takes the form of a body (19) having a hydrodynamic profile and a volume of between some litres and some tens of litres, this body being associated with traction means (22, 23), fixed to its front part.

19. Apparatus according to Claims 4 and 18 taken together, characterised in that the flexible drainage duct (21) for the fresh water is connected to the traction means (22) so as to come up to the boat.

20. Apparatus according to Claims 9 and 18 taken together, characterised in that it comprises on the outside of the body (19) at least one adjustable vane (32), operated so as to make the apparatus rise or descend, depending on its position, a mechanism (31) for operating said vanes being associated with the piston (28) so as to direct said vanes, on the one hand, into the rise position, when the piston reaches the end of the stroke towards the high pressure chamber and, on the other hand, into the descent position, when the piston reaches the end of the opposite stroke.

21. Apparatus according to one of the Claims 1 to 15, intended for the industrial production of fresh water from a coastal platform (54) or the like, characterised in that it has a volume of between some hundreds of litres and some tens of cubic metres approximately.

22. Apparatus according to Claim 21, characterised in that it is associated with a rise and descent unit carried by the platform (54).

23. Apparatus according to one of the preceding claims, characterised in that the chamber placed under gaseous atmosphere is provided with an air relief duct, placing it in communication with the surface.

Fig.1

Fig. 2 a

Fig. 2b

2

9

12

13

14

18

Fig. 3 a

Fig. 3b

2

9

12

13

17

H

Fig. 4

Fig. 5

0 062 944

Fig. 6a

Fig.6b

21

22

20 34 26

28b 28

37

36a

35b 27

Fig.7a

Fig.7b

Fig. 8

Fig.9